# EUROPÄISCHE PATENTANMELDUNG

(11) **EP 1 243 802 A2**
(43) Veröffentlichungstag der Anmeldung: **25.09.2002**
(21) Anmeldenummer: 01129154.9
(22) Anmeldetag: 08.12.2001
(51) Int. Cl.: F16C 27/06

(54) **Lageranordnung für ein Wellenlager**

(30) Priorität: 19.03.2001 DE 10113442
(71) Anmelder: Carl Freudenberg KG, 69469 Weinheim (DE)
(72) Erfinder: Schütz, Michael, 79418 Schliengen (DE); Bade, Karl-Heinz, 69483 Waldmichelbach (DE)

(57) **Zusammenfassung**

Lageranordnung für ein Wellenlager, umfassend einen in einem Gehäuse festlegbaren Stützring der ein Wälzlager radial außenseitig umschließt um mit dem Außenring des Wälzlagers einen Ringspalt zu bilden, ein den Ringspalt überbrückendes Balgelement, das am Stützring und am Außenring befestigt ist und ein Profil mit zumindest einer in axialer Richtung vorstehenden Falte aufweist, ein Anschlagpuffer, das im Ringspalt außerhalb der axialen Erstreckung der zumindest einen Falte angeordnet ist, wobei das Anschlagpuffer (9) durch einen zur Falte (2) geöffneten C-förmigen Ring (12) gebildet wird, der mit dem Stützring (1) oder mit dem Außenring (6) festgelegt ist und einen Schenkel (13) aufweist der kragarmförmig in den Ringspalt (4) ragt um einen Radialanschlag zu bilden.

## Beschreibung

Die Erfindung betrifft eine Lageranordnung für ein Wellenlager, umfassend einen in einem Gehäuse festlegbaren Stützring der ein Wälzlager radial außenseitig umschließt, um mit dem Außenring des Wälzlagers einen Ringspalt zu bilden, ein den Ringspalt überbrückendes Balgelement, das am Stützring und am Außenring befestigt ist und ein Profil mit zumindest einer in axialer Richtung vorstehenden Falte aufweist und ein Anschlagpuffer, der im Ringspalt außerhalb der axialen Erstreckung der zumindest einen Falte angeordnet ist.

### Stand der Technik

Eine Lageranordnung der oben genannten Art ist aus der DE 43 17 062 bekannt. Bei dieser Lageranordnung werden extreme radiale Auslenkbewegungen durch einen hydraulisch dämpfenden Anschlagbereich begrenzt. Ein Anschlagpuffer ist einem flüssigkeitsgefüllten Hohlraum angeordnet, der durch ein U-förmig, radial geöffnetes U-Profil gebildet wird, dessen Schenkel an einem radial außen liegenden Stützring anvulkanisiert sind. Bei einer radialen Ausweichbewegung des Wälzlagers kommt es zu einer Verlagerung der Dämpfungsflüssigkeit. Plötzlich auftretende, schlagartige Belastungen werden durch einen weichelastischen Arbeitsbereich gemindert und der Entstehung von Anschlaggeräuschen wirksam entgegen gewirkt. Die Herstellung dieses mit Dämpfungsfluid gefüllten Elastomerkörpers ist aber vergleichsweise aufwendig. Für bestimmte Anwendungsfälle stehen aber die Herstellungskosten im Vordergrund.

### Darstellung der Erfindung

Der Erfindung liegt die Aufgabe zugrunde, eine Lageranordnung der eingangs genannten Art mit dem Ziel einer einfachen, kostengünstigen Herstellbarkeit weiterzuentwickeln und dies robust und störunanfällig ist.

Diese Aufgabe wird dadurch gelöst, dass ein Anschlagpuffer durch einen zur Falte geöffneten C-förmigen Ring gebildet wird, der mit dem Stützring oder mit dem Außenring festgelegt ist und einen Schenkel aufweist der kragarmförmig in den Ringspalt ragt, der durch den Außenring des Wälzlagers und durch den Stützring gebildet wird. Dadurch werden extreme Radialauslenkungen der zu lagernden Wellenanordnung auf technisch einfache Weise begrenzt. Der C-förmige Ring kann einfach durch einen Presssitz am Stützring oder am Außenring des Wälzlagers befestigt werden. Seine Herstellung aus einem tiefziehbaren metallischen Werkstoff erfordert nur geringe Kosten. Von Vorteil ist, wenn der C-förmige Ring am Stützring festgelegt ist und der Schenkel an einem radial benachbarten Abschnitt der Außenumfangsfläche des Außenrings anlegbar ist. Da nur der vorspringende Schenkel in den Ringspalt ragt, nicht aber die radiale Erstreckung des C-förmigen Ringes, entsteht bei einer Anschlagberührung eine Federwirkung. Um störenden akustischen Schwingungsanregungen entgegenzutreten, kann es von Vorteil sein, wenn zumindest an einem Abschnitt dieser Außenumfangsfläche des Wälzlagers ein elastisch verformbarer Ringsteg anvulkanisiert ist, an den der Schenkel des C-förmigen Ringes anlegbar ist. Insbesondere dann, wenn die Umfangsfläche dieses Ringstegs Ausnehmungen, beispielsweise in Form von Nuten oder Stegen aufweist, lassen sich Anschlaggeräusche verringern.

Hinsichtlich geringer Herstellungskosten ist es von Vorteil, wenn das Balgelement und der Ringsteg einstückig und materialeinheitlich als Vulkanisationsteil aus einem Elastomer gebildet ist. Hierbei ist von besonderem Vorteil, wenn die Außenumfangsfläche des Außenrings durch ein chemisches oder mechanisches Oberflächenbehandlungsverfahren vorbehandelt ist. Auf diese Weise entsteht zwischen dem Balgelement und dem Außenring des Wälzlagers eine festhaftende Gummi-Metall-Verbindung.

Von besonderem Vorteil ist, wenn der Ringsteg einen gegenüber einer ersten Stirnfläche des Wälzlagers axial vorspringenden ersten Ansatz aufweist, der sich in axialer Richtung etwa bis zur vorstehenden Falte erstreckt, und einen etwa gleich großen zweiten Ansatz, der gegenüber einer zweiten Stirnfläche vorspringt. Diese beiden anvulkanisierten Ringstege haben ihre technische Wirkung im Sinne von zwei "Dichtungen". Diese Dichtungen werden bei herkömmlichen Kardanwellenlager als Blechteile zusätzlich montiert. Durch das Anvulkanisieren spart man die Montage und Herstellung der "Zusatz-Dichtungen".

Von Vorteil ist, wenn der in den Ringspalt ragende Schenkel ein Endstück aufweist, das innenseitig im C-förmigen Ring auf sich selbst zurückgefaltet ist. Dies ist notwendig, damit keine scharfen Kanten den Elastomer zerstören beziehungsweise um die Steifigkeit des C-förmigen Ringes zu erhöhen.

Für eine robuste, langlebige Gebraucheigenschaft des Anschlagpuffers ist es von Vorteil, wenn der in den Ringspalt ragende Schenkel im Bereich des Übergangs zwischen axialer und radialer Erstreckung durch Sicken versteift ist.

Durch diese Versteifungs-Sicken können vom Anschlagpuffer höhere Belastungsspitzen bei der Anschlagberührung aufgenommen werden.

Für Herstellung und Einbau der Lageranordnung ist es günstig, wenn ein zweiter Schenkel des C-förmigen Rings den Stützring außenumfangsseitig umschließt und durch Bördel die Ringe aneinander festgelegt sind. Diese Konstruktion ist teilearm und für die Serienfertigung besonders geeignet. Der Anschlagpuffer ist dadurch unverlierbar mit Balg und Wälzlager verbunden. Der Einbau in einer Befestigungskonsole kann durch einen Presssitz, bei dem die Außenumfangsfläche des zweiten Schenkels eine Pressfläche bildet.

Durch die Umbördelung des mit Elastomer beschichteten Stützrings kommt es zu Einpressungen im Elastomer, wodurch beide Ringe kraft- und formschlüssig verbunden und unverlierbar aneinander festgelegt sind.

### Kurzbeschreibung der Zeichnung

Zur weiteren Erläuterung wird auf die Zeichnungen Bezug genommen, in deren Figuren eine bevorzugte Ausführungsform gemäß der Erfindung schematisch dargestellt ist.

Es zeigen:
- Fig. 1: eine Lageranordnung in quergeschnittener Darstellung,
- Fig. 2: die in Fig. 1 dargestellte Lageranordnung in einer Ansicht. Ausführung der Erfindung

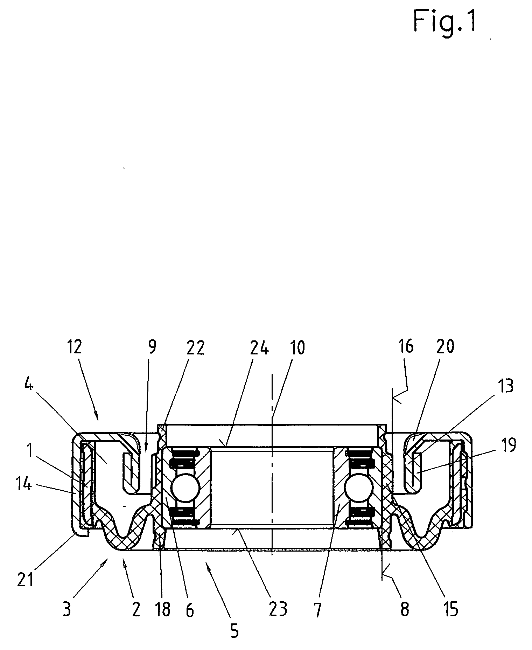

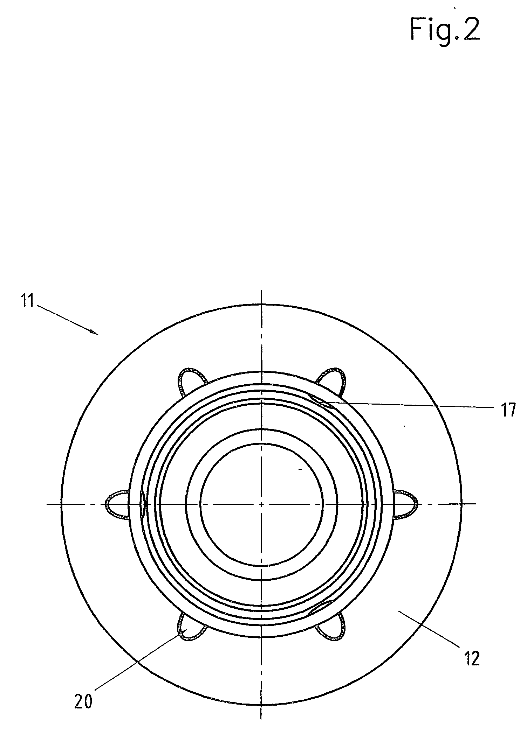

Fig. 1 und Fig. 2 zeigen eine bevorzugte Ausführungsform der erfindungsgemäßen Lageranordnung in einem Querschnitt beziehungsweise in einer Ansicht. Am Außenring 6 eines Wälzlagers 5 ist ein Balgelement 3 befestigt. Das Balgelement 3 überbrückt eine Ringspalt 4, der zwischen dem Außenring 6 und einem Stützring 1 gebildet wird. In der gezeigten Ausführungsform weist das Balgelement 3 eine in axialer Richtung vorstehende Falte 2 auf. Außerhalb der axialen Erstreckung dieser Falte 2 ist im Ringspalt ein Anschlagpuffer 9 angeordnet. Dieser Anschlagpuffer 9 wird durch einen C-förmigen Ring 12 gebildet, der mit dem Stützring 1 festgelegt ist. Ein Schenkel 13 dieses C-förmigen Ringes 12 ragt kragarmförmig in den Ringspalt und bildet dort mit der zum Wälzlager weisenden Anschlagfläche einen Radialanschlag. An der Außenumfangsfläche 8 des Außenrings 6 ist in diesem Anschlagbereich ein Ringsteg 15 anvulkanisiert. Durch diesen anvulkanisierten gummielastischen Ringsteg wird die Geräuschentwicklung bei einer Anschlagberührung mit dem C-förmigen Ring 12 verringert. Selbstverständlich kann auch der Schenkel 13 im Anschlagbereich mit Elastomer beschichtet sein. Wie aus der Schnittdarstellung in Fig. 1 deutlich hervorgeht, ragt nur der Schenkel 13 in den Ringspalt; die radiale Erstreckung des C-förmigen Profils ist außerhalb des Ringspalts, in Fig. 1, oberhalb der Stirnfläche 24 des Wälzlagers 5 angeordnet. Kommt es zu einer Anschlagberührung zwischen der Außenumfangsfläche 16 mit der radial gegenüberliegenden Anschlagfläche des Schenkels 13, so kann dieser kragarmförmige Schenkel elastisch zurückweichen. Die Umfangsfläche 16 des Ringstegs 15 ist mit Ausnehmungen 17 versehen. Diese Ausnehmungen 17 nehmen das bei einer Anschlagberührung verdrängte Elastomer auf.

In der Ansicht der Lageranordnung in Fig. 2 sind drei Ausnehmungen 17 beispielhaft dargestellt. Am Umfang des Ringstegs 15 können natürlich mehrere diese nutförmigen Ausnehmungen 17 angeordnet sein. Durch Sicken 20, die im Bereich des Übergangs zwischen der axialen und radialen Erstreckung des in den Ringspalt ragenden Schenkels 13 eingelegt sind, wird eine Versteifung des C-förmigen Ringes 12 erzielt.

Ein Endstück 19 des in den Ringspalt 4 ragenden Schenkels 13 ist innenseitig auf sich selbst zurückgefaltet. Der 180°-Bogen verstärkt den Endbereich des kragarmförmigen Schenkels 13. Der Ringsteg 15 ist mit einem vorspringenden ersten Ansatz 18 ausgebildet, der gegenüber der ersten Stirnfläche 23 etwa bis zu einer Höhe der Falte 2 sich erstreckt. Ein gleich großer zweiter Ansatz 22 an der gegenüberliegenden Seite des Wälzlagers überragt die zweite Stirnfläche 24.

Der C-förmige Ring 12 umschließt in der gezeigten Ausführungsform radial außenseitig mit einem zweiten Schenkel 14 den Stützring 1. Bördel 21 legen die Ringe 1, 12 aneinander fest. Aus der Schnittdarstellung in Fig. 1 ist erkennbar, dass der Stützring 1 von Elastomer umhüllt ist. Durch diese Gummibeschichtung pressen sich die Bördel 21 in das Elastomer der Beschichtung und bilden eine drehfeste kraft- und formschlüssige Verbindung.

Die dargestellte bevorzugte Ausführungsform der Erfindung zeichnet sich durch einen teilearmen Aufbau aus, ist im Betrieb robust und störunanfällig und vergleichsweise mit geringen Kosten herstellbar. Selbstverständlich kann die Abstützung des Außenrings 6 des Wälzlagers 5 auch durch ein Balgelement 3 gebildet werden, welches sich durch mehrere Gummifalten am Stützring abstützt. Denkbar ist auch eine Ausführungsform, bei der der C-förmige Ring am Außenring 6 des Wälzlagers 5 beispielsweise durch einen Presssitz mit seinem radial innenliegenden Schenkel befestigt ist, und der zweite Schenkel mit dem radial außenliegenden Stützring 1 eine Anschlagfläche bildet.

Durch eine mikroskopisch rauhe Oberfläche der Außenumfangsfläche 8 des Außenrings 6 erzielt man eine sehr dauerhafte Gummi-Metallverbindung zwischen Balgelement 3 und Ring 6 des Wälzlagers 5. Innerhalb von Grenzen erlaubt die Abstützung durch den Gummibalg 3 auch eine axiale Verlagerung der in Fig. 1 und Fig. 2 nicht dargestellten um die Achse 10 rotierenden Welle.

Durch die Erfindung wird eine Lageranordnung mit einem besonders einfachen Radial-Anschlagpuffer geschaffen, der mit geringen Kosten herstellbar ist und während der bestimmungsgemäßen Verwendung robust und zuverlässig ist. Die Lageranordnung kann beispielsweise im Antriebsstrang eines Kraftfahrzeugs zur Lagerung des Kardanwelle eingesetzt werden.

## Patentansprüche

1. Lageranordnung für ein Wellenlager, umfassend einen in einem Gehäuse festlegbaren Stützring der ein Wälzlager radial außenseitig umschließt um mit dem Außenring des Wälzlagers einen Ringspalt zu bilden, ein den Ringspalt überbrückendes Balgelement, das am Stützring und am Außenring befestigt ist und ein Profil mit zumindest einer in axialer Richtung vorstehenden Falte aufweist, ein Anschlagpuffer, das im Ringspalt außerhalb der axialen Erstreckung der zumindest einen Falte angeordnet ist, **dadurch gekennzeichnet, dass** das Anschlagpuffer (9) durch einen zur Falte (2) geöffneten C-förmigen Ring (12) gebildet wird, der mit dem Stützring (1) oder mit dem Außenring (6) festgelegt ist und einen Schenkel (13) aufweist der kragarmförmig in den Ringspalt (4) ragt um einen Radialanschlag zu bilden.

2. Lageranordnung nach Anspruch 1, **dadurch gekennzeichnet, dass** der C-förmige Ring (12) am Stützring (1) festgelegt ist und der Schenkel (13) an einem radial benachbarten Abschnitt der Außenumfangsfläche (8) des Außenrings (6) anlegbar ist.

3. Lageranordnung nach Anspruch 2, **dadurch gekennzeichnet, dass** zumindest an einem Abschnitt der Außenumfangsfläche (8) ein elastisch verformbarer Ringsteg (15) anvulkanisiert ist an den der Schenkel (13) anlegbar ist.

4. Lageranordnung nach Anspruch 3, **dadurch gekennzeichnet, dass** an der Umfangsfläche (16) des Ringstegs (15) Ausnehmungen (17) vorgesehen sind.

5. Lageranordnung nach Anspruch 3, **dadurch gekennzeichnet, dass** das Balgelement (3) und der Ringsteg (15) einstückig und materialeinheitlich als Vulkanisationsteil aus einem Elastomer gebildet ist.

6. Lageranordnung nach Anspruch 5, **dadurch gekennzeichnet, dass** die Außenumfangsfläche (8) des Außenrings (6) durch ein chemisches oder mechanisches Oberflächenbehandlungsverfahren vorbehandelt ist.

7. Lageranordnung nach einem der Ansprüche 3 bis 6, **dadurch gekennzeichnet, dass** der Ringsteg (15) einen gegenüber einer ersten Stirnfläche (23) des Wälzlagers (5) axial vorspringenden ersten Ansatz (18) aufweist, der sich in axialer Richtung etwa bis zur vorstehenden Falte (2) erstreckt, und einen etwa gleich großen zweiten Ansatz (22), der gegenüber einer zweiten Stirnfläche (24) vorspringt.

8. Lageranordnung nach einem der vorstehenden Ansprüche, **dadurch gekennzeichnet, dass** der in den Ringspalt (4) ragende Schenkel (13) ein Endstück (19) aufweist, das innenseitig im C-förmigen Ring (12) auf sich selbst zurückgefaltet ist.

9. Lageranordnung nach einem der vorstehenden Ansprüche, **dadurch gekennzeichnet, dass** der in den Ringspalt (4) ragende Schenkel (13) im Bereich des Übergangs zwischen axialer und radialer Erstreckung durch Sicken (20) versteift ist.

10. Lageranordnung nach einem der vorstehenden Ansprüche, **dadurch gekennzeichnet, dass** ein zweiter Schenkel (14) des C-förmigen Rings (12) den Stützring (1) außenumfangsseitig umschließt und durch Bördel (21) die Ringe (1, 12) aneinander festgelegt sind.

11. Lageranordnung nach Anspruch 10, **dadurch gekennzeichnet, dass** der Stützring (1) vollständig von Elastomer umschlossen ist und die Bördel (21) die Ringe (1, 12) kraft- und formschlüssig verbinden.

12. Lageranordnung nach einem der vorstehenden Ansprüche, **dadurch gekennzeichnet, dass** der Stützring (1) und / oder der C-förmige Ring (12) aus einem tiefziehbaren metallischen Werkstoff bestehen.

13. Lageranordnung nach einem der vorstehenden Ansprüche, **dadurch gekennzeichnet, dass** der C-förmige Ring (12) durch Rollen eines Blechrings hergestellt ist.
